# FASCICULE DE BREVET EUROPEEN

(11) **EP 1 882 604 B1**
(45) Date de publication et mention de la délivrance du brevet: **22.04.2009**
(21) Numéro de dépôt: 07112369.9
(22) Date de dépôt: 12.07.2007
(51) Int. Cl.: B60J 7/00, B60J 1/20, B60R 5/04

(54) **Dispositif d'occultation à élément de maintien, et véhicule correspondant**
Abdeckungsvorrichtung mit Halteelement und entsprechendes Fahrzeug
Device for concealing a supporting element, and corresponding vehicle

(30) Priorité: 28.07.2006 FR 0606964
(43) Date de publication de la demande: 30.01.2008
(73) Titulaire: Wagon SAS, 79302 Bressuire Cédex (FR)
(72) Inventeur: Fourel, Pascal, 35400 Saint-Malo (FR)
(74) Mandataire: Bioret, Ludovic

(56) Documents cités:
- EP-A- 1 304 246
- EP-A- 1 470 942
- EP-A- 1 671 826
- EP-A1- 1 129 871
- EP-A2- 1 495 889
- EP-A2- 1 612 070
- US-A- 4 738 481
- US-A- 4 921 299

## Description

### 1. Domaine de l'invention

Le domaine de l'invention est celui des véhicules, par exemple des véhicules automobiles, mais également des autobus, des cabines de camion...

L'invention concerne notamment les véhicules présentant une surface vitrée importante, par exemple au niveau du pavillon et/ou du pare-brise.

Plus précisément, l'invention concerne l'occultation de telles surfaces au moyen de toiles d'occultation mobiles entre une position repliée et au moins une position déployée, par exemple pour se protéger des rayons du soleil.

### 2. Art antérieur

EP 1 495 889 (WEBASTO) décrit un dispositif d'occultation pour véhicule, comprenant une toile d'occultation mobile selon un axe de déploiement entre une position repliée et au moins une position déployée, dont une extrémité est montée sur un tube enrouleur.

La tendance actuelle, notamment en matière de véhicule automobile, est de proposer de plus en plus de surfaces vitrées. Ainsi, notamment, on a proposé de plus en plus de véhicules présentant un pavillon équipé d'un ou de plusieurs éléments vitrés. Dans certains cas, l'intégralité du pavillon est en verre ou en matériau similaire laissant passer les rayons du soleil. On a également proposé des véhicules équipés de pare-brise « plongeant » fortement incliné et/ou se prolongeant sur une portion du pavillon, et présentant une surface importante.

On comprend qu'il est alors nécessaire de prévoir des dispositifs d'occultation permettant de protéger l'habitacle et ses occupants des rayons du soleil.

Un besoin similaire peut exister pour des zones à recouvrir et dissimuler, tels qu'une zone de rangement de bagages, notamment pour un coffre de break ou de monospace.

Des stores à enrouleur sont utilisés depuis longtemps de façon à occulter des surfaces de véhicules automobiles.

La mise en oeuvre de tels stores, par exemple pour l'occultation d'un pavillon vitré, est cependant complexe. En effet, si l'on déploie une toile présentant une grande largeur et une grande longueur, celle-ci se déforme, « poche », sous l'effet de la gravité.

En outre, les pare-brises et/ou les pavillons des véhicules automobiles ne sont souvent pas plats, mais au contraire galbés ou incurvés, au moins dans le sens de la largeur, et parfois également dans le sens de la longueur

Des techniques de l'art antérieur proposent de maintenir la toile d'occultation dans sa position déployée au moyen de baleines. Selon une première technique, les baleines sont solidarisées à la toile. Selon une seconde technique, les baleines sont déployables et ne sont solidaires de la toile que lorsque celle-ci est déployée.

Un inconvénient de ces techniques de l'art antérieur est que la mise en oeuvre de telles baleines est relativement complexe.

Un autre inconvénient de ces techniques de l'art antérieur est qu'elles sont coûteuses à mettre en oeuvre.

Encore un inconvénient de ces techniques de l'art antérieur est qu'elles ne permettent pas un suivi efficace des galbes que peut présenter un pavillon vitré et /ou un pare-brise dans deux directions, et notamment dans le sens de déploiement de la toile d'occultation.

Un autre inconvénient de ces techniques de l'art antérieur est qu'elles nécessitent de guider latéralement la toile. Ceci est d'autant plus difficile que, parfois, les pavillons vitrés des véhicules présentent des contours non-parallèles.

### 3. Objectifs de l'invention

L'invention a notamment pour objectif de pallier ces inconvénients de l'art antérieur.

Plus précisément, un objectif de l'invention est de fournir une telle technique qui permette d'imprimer simplement et efficacement à une toile d'occultation les gables que peut présenter une surface vitrée dans deux directions, et notamment dans le sens de déploiement de la toile d'occultation.

L'invention à également pour objectif de fournir une telle technique qui permette de déployer une toile d'occultation au plus près d'une surface vitrée non plane, y compris lorsque ses bords latéraux ne sont pas parallèles.

Un autre objectif de l'invention est de fournir une telle technique qui soit fiable et robuste.

L'invention à encore pour objectif de procurer une telle technique qui soit simple à mettre en oeuvre et qui soit peu onéreuse.

Un autre objectif de l'invention est de proposer une telle technique qui présente de bonnes qualités ergonomique notamment en ce qui concerne la facilité d'utilisation.

### 4. Exposé de l'invention

Ces objectifs, ainsi que d'autres qui apparaîtront par la suite, sont atteints à l'aide d'un dispositif d'occultation pour véhicule, comprenant une toile d'occultation mobile selon un axe de déploiement entre une position repliée et au moins une position déployée, dont une extrémité est montée sur un tube enrouleur.

Selon l'invention, ladite toile d'occultation porte au moins un élément de maintien et/ou de guidage éloigné des bords latéraux de ladite toile et s'étendant parallèlement audit axe de déploiement, et coopérant avec un rail de guidage de section complémentaire à celle dudit élément de maintien et/ou de guidage, formé dans ou sur une traverse s'étendant à l'intérieur dudit véhicule.

Ainsi, l'invention repose sur une approche tout à fait nouvelle et inventive du guidage et du maintien d'une toile de store d'occultation, notamment pour pare-brise et/ou pour pavillon vitré de véhicules automobiles consistant à suspendre la toile à une traverse solidaire du véhicule, placée au voisinage du pare-brise et/ou du pavillon, et présentant un galbe sensiblement équivalent au galbe du pare-brise et/ou pavillon dans le sens de déploiement de la toile d'occultation. De cette façon, les galbes que présentent le pare-brise et/ou le pavillon dans le sens de déploiement de la toile, mais également selon une direction transversale au sens de déploiement de la toile d'occultation sont sensiblement imprimés à la toile de façon simple et efficace.

Avantageusement, ledit élément de maintien s'étend sensiblement sur toute la longueur de ladite toile d'occultation.

Cette approche permet d'imprimer efficacement et simplement à la toile le galbe transversal que présente la surface à occulter.

Selon une caractéristique préférée de l'invention, ladite section complémentaire est sensiblement triangulaire ou trapézoïdale.

L'élément de maintien est ainsi correctement guidé et maintenu dans le rail.

Préférentiellement, ledit élément de maintien est solidarisé à ladite toile d'occultation par collage et/ou soudage et/ou thermosoudage et/ou piquage.

L'élément de maintien peut alors être solidarisé efficacement à la toile de façon simple et peu coûteuse.

Dans une mode de réalisation avantageux de l'invention, ladite toile d'occultation porte, à son extrémité libre, une barre de tirage guidée par ladite traverse.

Cette approche permet de faciliter le déploiement et le repli de la toile, et également de lui imprimer le galbe transversal que peut présenter la surface à occulter.

Selon une caractéristique avantageuse de l'invention, ladite barre de tirage comprend un élément de solidarisation à ladite traverse, pouvant coulisser le long de ladite traverse.

La barre de tirage peut ainsi être facilement déplacée le long de la traverse de façon à déployer et à replier la toile. Cet aspect permet également de réduire les contraintes mécaniques engendrées au niveau de la barre de tirage et de réduire en conséquence sa section et sa masse. Ceci a notamment pour effet de diminuer la perte de garde au toit au niveau de la barre de tirage et d'augmenter légèrement l'habitabilité du véhicule.

Dans ce cas, ledit élément de solidarisation définit préférentiellement avec ladite traverse un assemblage de type queue d'aronde.

Dans une variante de l'invention, ledit véhicule porte deux rails latéraux guidant et/ou maintenant lesdits bords latéraux de ladite toile d'occultation et/ou une barre de tirage de ladite toile et/ou au moins une baleine.

Cette approche permet de guider efficacement les bords de la toile, et de faciliter la mise en place de stores d'occultation dans les véhicules dont le pare-brise et/ou le pavillon ne présentent pas de bords latéraux parallèles.

Avantageusement, ledit élément de guidage et/ou de maintien porte au moins une baleine de maintien de ladite toile d'occultation.

Préférentiellement, ladite traverse porte et/ou guide au moins une baleine de maintien de ladite toile d'occultation.

La mise en place de baleines permet d'imprimer à la toile le galbe transversal et le galbe longitudinal que peut présenter la surface à occulter.

De façon avantageuse, ladite traverse porte des moyens d'entraînement de ladite toile d'occultation et/ou d'une barre de tirage de ladite toile d'occultation.

Cette caractéristique permet notamment de motoriser le déploiement et le repli de la toile.

Préférentiellement, ladite toile d'occultation est destinée à occulter au moins une des surfaces suivantes :
- un pavillon vitré ;
- un pare-brise ;
- une vitre latérale ;
- une vitre arrière ;
- un coffre à bagages.

De façon avantageuse, ladite traverse s'étend longitudinalement au moins au voisinage du pare-brise dudit véhicule.

Il est alors possible de mettre en place facilement un rétroviseur à l'intérieur du véhicule en le solidarisant à la traverse. Il est également possible d'acheminer facilement de l'énergie électrique au niveau d'une partie supérieure d'un pare-brise.

Avantageusement, ladite traverse s'étend longitudinalement au voisinage du pavillon dudit véhicule.

Il est ainsi possible d'occulter au moins partiellement un pavillon vitré, et d'imprimer simplement à la toile d'occultation le galbe transversal et/ou le gable longitudinal que peut présenter un pavillon.

L'invention concerne également un véhicule équipé d'un dispositif d'occultation selon l'invention.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente une vue de dessus d'un mode de réalisation d'un pavillon équipé d'un élément de maintien et/ou de guidage selon l'invention ;
- la figure 2 est une vue en coupe selon un axe transversal du pavillon illustré à la figure 1 ;
- la figure 3 est une vue en coupe selon un axe longitudinal du pavillon illustré à la figure 1 ;
- la figure 4 illustre un mode de réalisation particulier d'un élément de guidage et/ou de maintien et d'une traverse selon l'invention ;
- la figure 5 illustre un mode de réalisation particulier d'un rail latéral et d'un coulisseau selon l'invention ;
- la figure 6 illustre une variante d'un mode de réalisation de la technique selon l'invention dans laquelle l'extrémité libre la toile est munie une barre de tirage guidée par la traverse ;
- la figure 7 illustre une vue depuis l'intérieur d'un véhicule de la variante de l'invention dans laquelle la toile est maintenue par des baleines lumineuses ;
- les figures 8A à 8C illustrent schématiquement, en coupe, trois exemples de sections d'un élément de guidage et/ou de maintien et d'une traverse selon l'invention ;
- la figure 9 illustre un exemple module de haut de pare-brise selon l'invention, mettant en oeuvre une traverse s'étendant sur une portion supérieure d'un pare-brise ;
- la figure 10 illustrent un exemple de traverse selon l'invention, sur laquelle sont ménagés des crantages permettant l'immobilisation d'une barre de tirage dans des positions prédéterminée.

### 6. Description d'un mode de réalisation de l'invention

Le mode de réalisation qui suit s'applique à un module de haut de pare-brise dans lequel la toile d'occultation permet d'occulter au moins partiellement une partie supérieure de pare-brise. L'homme du métier pourra aisément adapter l'invention à d'autres mises en oeuvre, par exemple lorsque la toile occulte un pavillon vitré, ou au moins une partie du pavillon.

### 6.1 Principe de l'invention

Le principe général de l'invention repose sur la mise en oeuvre d'une traverse solidaire d'un véhicule, s'étendant au voisinage d'une partie supérieure de pare-brise, et présentant un rail avec lequel coopère un élément de maintien et/ou de guidage porté par une toile d'occultation et éloigné de ses bords latéraux, de façon que celle-ci soit guidée et maintenue et épouse sensiblement les galbes que peut présenter le pare-brise dans deux directions, et notamment dans le sens de déploiement de la toile d'occultation et selon une direction transversale au sens de déploiement de la toile.

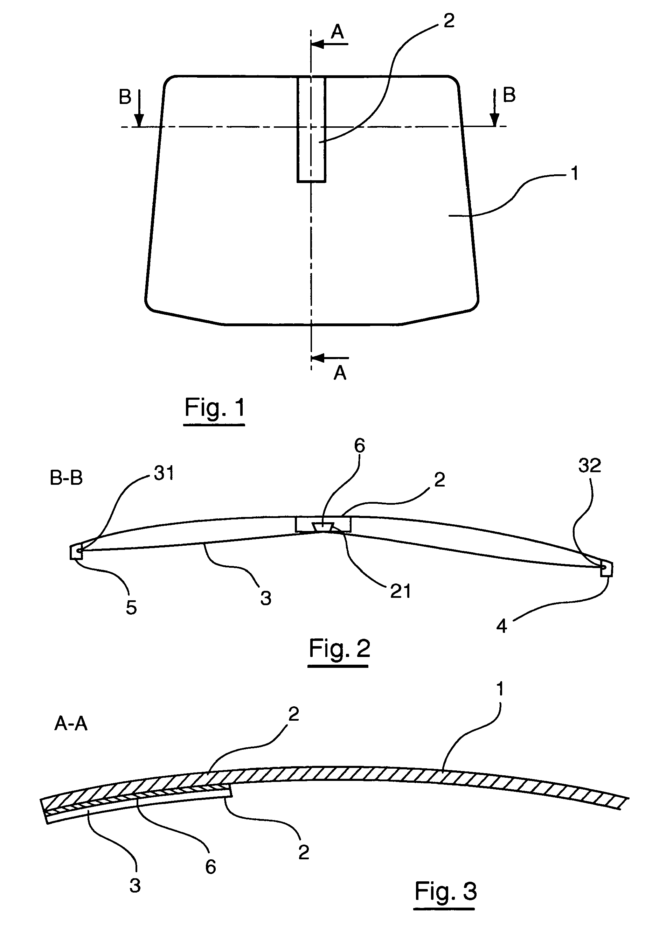

La figure 1 est une vue de dessus d'un pare-brise 1 d'un véhicule, le long duquel s'étend une traverse, ou longeron, 2. Cette traverse 2 est rapportée sous la face intérieure du pare-brise 1 selon un axe sensiblement parallèle à l'axe longitudinal A du véhicule, et y est solidarisée, par exemple par collage. D'autres moyens de solidarisation peuvent être envisagés. La traverse 2 peut notamment être solidarisé à la structure même du véhicule au moyens d'élément de solidarisation prévus à cet effet.

La figure 2 est une vue en coupe du pare-brise 1 et de la traverse 2 illustrés à la figure 1, selon l'axe B.

La figure 3 est une vue en coupe selon l'axe A du pare-brise 1 et de la traverse 2 illustrés à la figure 1.

Tel que cela apparaît sur ces figures 2 et 3, le pare-brise 1 présente un galbe transversal. Le pare-brise 1 présente également un galbe longitudinal. Les proportions de ces galbes ont été volontairement augmenter de façon à rendre plus clair l'exposé.

La traverse 2 présente un rail central 21 ouvert dans une direction sensiblement perpendiculaire au pare-brise 1, vers l'intérieur de l'habitacle.

Une toile d'occultation 3 mobile entre une position repliée dans laquelle elle est enroulée autour d'un tube d'enroulement (non représenté), et au moins une position déployée dans laquelle elle occulte au moins en partie le pare-brise 1, présente dans sa partie supérieure un élément de maintien et/ou de guidage 6. L'élément de maintien et/ou de guidage 6 présente une forme complémentaire à celle du rail central 21 de façon qu'il puisse y coulisser.

Cette approche est différente des techniques classiques, prévoyant des baleines et/ou des guidages des bords latéraux de la toile. Selon l'invention, la toile est maintenue et guidée par la partie centrale de la toile.

La technique de l'invention peut être étendue à deux, ou plus, éléments de maintien et/ou de guidage 6, notamment si la toile présente une grande largeur et/ou si le galbe souhaitée le nécessite.

Les extrémités latérales 31 et 32 de la toile 3 sont préférentiellement maintenues et coulissent dans deux rails latéraux 4 et 5 qui s'étendent au voisinage des bords latéraux du pare-brise 1.

Lorsque la toile passe de sa position repliée à une position déployée, l'élément de maintien et/ou de guidage 6 coulisse à l'intérieur du rail central 21.

En position déployée, la toile 3 est maintenue dans trois zones :
- la toile 3 est maintenue en sont milieu par l'élément de maintien et/ou de guidage 6 qui coopère avec le rail central 21;
- la toile 3 est maintenue par chacune de ses extrémités latérales 31 et 32 qui coopèrent avec les rails latéraux 4 et 5.

Le galbe longitudinal que présente le pare-brise 1 (parallèlement à la direction de déplacement de la toile 3) est ainsi sensiblement imprimé à la toile 3.

Tel que cela apparaît sur la figure 3, le fait que la toile soit maintenue en son milieu au moyen de l'élément de maintien et/ou de guidage 6 qui coulisse à l'intérieur du rail central 21, permet également d'imprimer à la toile 3 un galbe transversal proche de celui que présente le pare-brise.

La technique selon l'invention permet donc à la toile d'être déployée au voisinage du pare-brise 1 de façon simple et efficace.

### 6.3 L'élément de maintien et/ou de guidage et la traverse

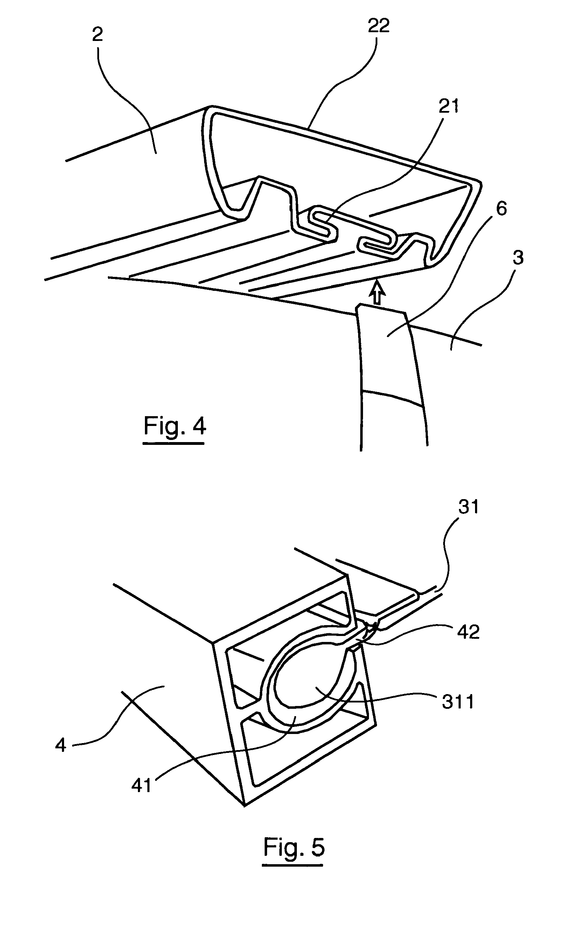

La figure 4 illustre un exemple d'élément de maintien et/ou de guidage et la traverse selon l'invention.

L'élément de maintien et/ou de guidage 6 s'étend selon l'axe longitudinal de la toile 3, essentiellement en son milieu, et sensiblement sur toute sa longueur. Il y est solidarisé, par exemple par collage. D'autres modes de solidarisation peuvent bien sûr être envisagés. L'élément de maintien et/ou de guidage 6 pourra ainsi, par exemple, être thermosoudé sur la toile 3. Il pourra encore y être cousu.

L'élément de maintien et/ou de guidage 6 est réalisé dans un matériau résistant présentant notamment de bonnes aptitudes au coulissement. Il pourra être réalisé, par exemple, en polyéthylène. Il peut présenter, le cas échéant, des éléments facilitant ce coulissement (patins, billes, aiguilles...).

Il présente préférentiellement une section de faible épaisseur de façon qu'il n'augmente pas considérablement le diamètre d'enroulement de la toile 3 sur le tube d'enroulement.

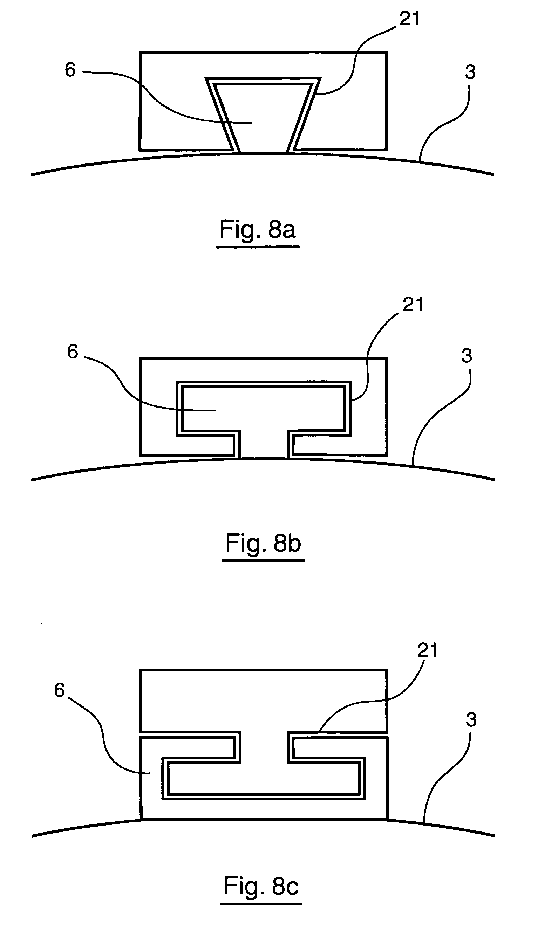

Les figures 8A à 8C illustrent, à titre indicatif, différentes sections envisageables pour l'élément de maintien et/ou de guidage 6 et le rail 21.

Dans une variante de l'invention, l'élément de maintien et/ou de guidage peut être constitué par un bourrelet ou par une couture raccordée à la toile d'occultation. Cette approche permet d'obtenir un élément de maintien et/ou de guidage d'épaisseur relativement faible et de réduire en conséquence la perte de garde au toit et d'augmenter l'habitabilité du véhicule.

La traverse 2 présente une cavité centrale 22 dont les contours forment notamment le rail central 21. La forme intérieure du rail central est complémentaire de l'élément de maintien et/ou de guidage 6 de façon qu'il puisse y coulisser et y être maintenu. Le rail central 21 et l'élément de maintien et/ou de guidage 6 forment un système de type queue d'aronde.

La traverse 2 présente, dans ce mode de réalisation, une face supérieure 22 sensiblement plane, destinée à venir en contact avec la face intérieure du pavillon 1 auquel elle est solidarisée par exemple par collage.

La traverse 2 est réalisée dans un matériau rigide et robuste. Elle pourra notamment être réalisée en alliage d'aluminium et être obtenue par extrusion et cintrée de façon à présenter un galbe sensiblement égal au galbe transversal que présente le pavillon. Elle pourra encore être réalisée dans un matériau plastique adapté comme du polypropylène ou du polyamide.

Dans une variante de l'invention, la face supérieure de la traverse peut ne pas être plane. Une goulotte (non représentée) peut ainsi être ménagée sur la face supérieure 22 de façon à faciliter le passage de câbles, de fil électriques, et ainsi permettre de fournir en énergie électrique un équipement placé dans la région du pare-brise comme un rétroviseur, un GPS...

La cavité centrale 22 peut notamment remplir une fonction de passe fil de façon à faciliter le transport d'énergie électrique à l'intérieur de l'habitacle, notamment dans la région supérieure du pare-brise.

### 6.4 Les rails latéraux et les coulisseaux

La figure 5 est une vue en coupe d'un rail latéral 4, 5 à l'intérieur duquel coulisse une extrémité 31 de la toile 3, selon un mode de réalisation de l'invention.

Le rail 4 présente une section extérieur sensiblement carré et une section intérieur en forme de « C » définissant une portion de guidage 41 s'ouvrant sur une fente 42.

Les rails 4, 5 sont préférentiellement réalisés dans un matériau rigide et solide. Ils peuvent notamment être réalisés en acier, en alliage d'aluminium ou dans des matériaux plastiques notamment par extrusion. Tout autre matériau et mode d'obtention adaptés peuvent être mis en oeuvre.

Les rails latéraux 4, 5 sont solidarisés à la structure du véhicule, par exemple au moyen de vis. D'autres techniques de solidarisation, comme le clippage, l'agrafage peuvent être utilisées.

Un coulisseau 311 est solidarisé à une extrémité latérale 31 de la toile 3 (un tel coulisseau est solidarisé à chaque extrémité latérale de la toile 3). Il présente une forme complémentaire de la portion de guidage en forme de « C » 41 de façon à pouvoir y coulisser, et à guider et maintenir chaque extrémité latérale de la toile 3.

Chaque coulisseau 311 est solidarisé à chaque extrémité latérale de la toile 3 par piquage. D'autres modes de fixation peuvent bien sûr être utilisés. Les coulisseaux pourront, par exemple, être solidarisé à la toile par thermosoudage, par collage, ou par toute autre technique appropriée.

### 6.5 Option : traverse mobile

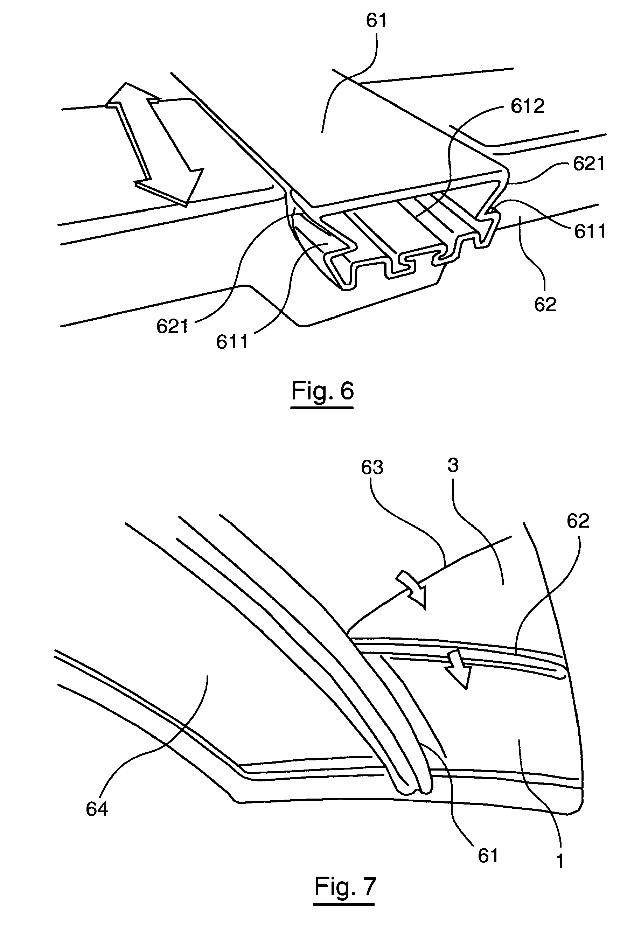

La figure 6 illustre une option avantageuse de l'invention dans laquelle une barre de tirage 62, représentée sous la forme d'une traverse mobile, est liée à l'extrémité libre de la toile 3. La barre de tirage 62 présente un galbe sensiblement égal au galbe transversal du pare-brise 1.

La traverse 61 présente deux portions formant rails de côté 611, ouverts dans une direction sensiblement parallèle au pavillon, de part et d'autre de l'élément de guidage 61.

La barre de tirage 62 présente deux portions de coulissement 621 destinées à coopérer avec les rails de côté 611.

L'extrémité libre de la toile 3 est solidarisée à la barre de tirage 62, par exemple par collage, thermosoudage. D'autres modes de solidarisation adaptés peuvent être utilisés.

La barre de tirage 62 est réalisée dans un matériau choisi de façon à résister aux efforts d'arrachement et/ou de suspension de charge. Il pourra notamment s'agir de polymère chargé.

Dans ce mode de réalisation, la barre de tirage 62 comprend un élément de solidarisation à la traverse, prenant ici la forme des portions de coulissement 621. Un tel élément de solidarisation permet d'assurer le maintien de la barre de tirage. Ceci à pour effet de réduire les contraintes sur la barre de tirage, et donc de réduire sa section et sa masse, et de simplifier le système. Ceci permet encore de réduire la perte de garde au toit et d'augmenter l'habitabilité du véhicule.

On peut bien sûr prévoir une ou plusieurs baleines conçues et montées de la même façon que la barre de tirage.

La toile 3 peut être guidée sous la traverse 61.

Dans une variante de l'invention, les rails latéraux 4, 5 peuvent ne pas être mis en oeuvre. Les extrémités latérales de la toile 3 ne sont alors pas guidées, mais maintenues par la barre de tirage 62 et, éventuellement, des baleines.

### 6.6 Autres caractéristiques et avantages

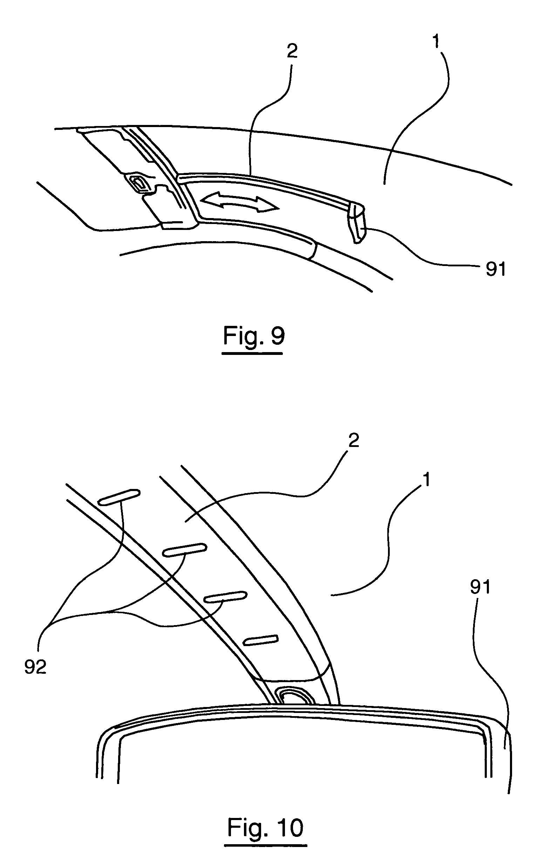

Tel que cela apparaît sur les figures 9 et 10, la traverse 2 peut permettre la mise en place aisée d'un rétroviseur. Il n'est ainsi plus nécessaire de coller le rétroviseur au pare-brise.

De plus, le rétroviseur peut être équipé de moyens d'éclairage ou bien mettre en oeuvre une technologie de type électrochrome sans poser de problème de connectique dans la mesure où l'alimentation électrique est présente dans la traverse.

En outre, la traverse peut également permettre la mise en place d'un capteur de pluie pilotant, par exemple, la mise en route des essuie-glaces, simplement et sans poser de problème de connectique.

Une succession de crantages 92 peut être ménagée sur la face de la traverse tournée vers l'intérieur de l'habitacle. Ces crantages permettent l'immobilisation de la barre de tirage dans des positions prédéterminées. Cette approche permet de simplifier les systèmes complexes, classiquement mis en oeuvre, permettant le blocage en position de l'occulteur. En effet, très souvent, les mécanismes de blocage sont situés aux extrémités de la barre de tirage et nécessitent une mécanique relativement complexe pour transmettre les mouvements depuis un actionneur, placé sensiblement au milieu de la barre de tirage (par exemple une poignée), vers les zones de blocage latérales (par exemple les rails de côtés). La mise en oeuvre de tels systèmes de blocage s'avère être particulièrement complexe, notamment lorsque les côtés de la surface à occulter ne sont pas parallèles.

### 6.7 Variante : occultation d'un pavillon

Dans un autre mode de réalisation la traverse peut se prolonger vers l'arrière du véhicule sur une portion du pavillon voire sur toute sa longueur si le pavillon est vitré.

Dans ce cas, on peut prévoir, comme dans le cas du module de haut de pare-brise, que la traverse soit collée sur la face intérieure du pavillon.

Dans ce mode de réalisation particulier, on peut également prévoir qu'un espace soit ménagé entre le pavillon et la traverse 61, pour permettre le passage de la toile 3. Dans ce cas, la traverse 61 n'est pas collée sur toute au pavillon, mais est fixé à celui-ci, ou à des éléments de structure du véhicule, au moins par ses extrémités.

Dans ce mode de réalisation de l'invention, les rails latéraux 4, 5 peuvent ne pas être mis en oeuvre. Les extrémités latérales de la toile 3 ne sont alors pas guidées, mais maintenues par la barre de tirage 62 et, éventuellement, des baleines. Ceci peut permettre notamment de faciliter l'installation de stores d'occultation dans les véhicules dont le pavillon ne présente pas des bords latéraux parallèles.

La toile 3 est avantageusement associée à des baleines 63, 64 qui permettent d'imprimer à la toile un galbe correspondant sensiblement au galbe transversal et au galbe longitudinal que présente le pavillon.

Ces baleines peuvent être solidarisées à la traverse 61, et être amovibles, et montées mobiles, de façon qu'au repos elles soient rabattues le long de la traverse 61, et qu'elles se déploient et se rétractent au passage de la traverse mobile 62.

Des moyens spécifiques d'actionnement (doigts, ergots, crémaillères...) peuvent être prévus pour contrôler le déplacement des baleines. On peut également prévoir que l'actionnement des baleines est indépendant de la traverse mobile 62, et contrôlé par la toile 3, ou manuellement ou de façon motorisée, par l'utilisateur.

Dans une variante de l'invention, les baleines peuvent être solidarisées à l'élément de maintien et/ou de guidage, ou à la toile 3.

La traverse 61 présente une cavité intérieure 612. Cette cavité 612 assure notamment la fonction de passe fil et permet le transport d'énergie électrique de façon à alimenter, par exemple, des éléments d'éclairage logés au niveau des baleines 63, 64 (cf. figure 7). Il peut notamment s'agir de diodes électroluminescentes, de fibres optiques ou encore de barreaux diffuseurs de lumières mettant en oeuvre des films électroluminescents. D'autres moyens d'éclairage peuvent être mis en oeuvre. Les baleines lumineuses 63, 64 permettent ainsi la diffusion de lumière à l'intérieur de l'habitacle et la création de diverses ambiances.

### 6.8 Autres applications

La technique selon l'invention s'applique notamment à l'occultation de pavillons vitrés de véhicules automobiles. Elle peut également s'appliquer à l'occultation de pavillons vitrés d'autres types de véhicules, comme les cabines de camion, les autobus, les tracteurs...

La technique selon l'invention peut également permettre l'occultation de surfaces vitrées autres que les pavillons de véhicules. En particulier, la présente technique peut être mise en oeuvre afin d'occulter, au moins partiellement, des pare-brises de grandes tailles, notamment les pare-brises d'autobus, de cabine de camion, ... sans sortir pour autant du champ de la présente invention.

L'invention peut également être adaptée, par exemple, à un cache-bagages.

## Revendications

1. Dispositif d'occultation pour véhicule, comprenant une toile d'occultation (3) mobile selon un axe de déploiement entre une position repliée et au moins une position déployée, dont une extrémité est montée sur un tube enrouleur,
**caractérisé en ce que** ladite toile d'occultation (3) porte au moins un élément de maintien et/ou de guidage (6) éloigné des bords latéraux de ladite toile et s'étendant parallèlement audit axe de déploiement,
et coopérant avec un rail de guidage (21) de section complémentaire à celle dudit élément de maintien et/ou de guidage (6), formé dans ou sur une traverse (2, 61) s'étendant à l'intérieur dudit véhicule.

2. Dispositif d'occultation selon la revendication 1, **caractérisé en ce que** ledit élément de maintien (6) s'étend sensiblement sur toute la longueur de ladite toile d'occultation (3).

3. Dispositif d'occultation selon l'une quelconque des revendications 1 et 2, **caractérisé en ce que** ladite toile d'occultation (3) porte un élément de maintien et/ou de guidage (6) qui s'étend essentiellement au milieu de ladite toile d'occultation (3).

4. Dispositif selon l'une quelconque des revendications 1 à 3, **caractérisé en ce que** ladite section complémentaire est sensiblement triangulaire ou trapézoïdale.

5. Dispositif selon l'une quelconque des revendications 1 à 4, **caractérisé en ce que** ledit élément de maintien (6) est solidarisé à ladite toile d'occultation (3) par collage et/ou soudage et/ou thermosoudage et/ou piquage.

6. Dispositif selon l'une quelconque des revendications 1 à 5, **caractérisé en ce que** ladite toile d'occultation (3) porte, à son extrémité libre, une barre de tirage (62) guidée par ladite traverse (2, 61).

7. Dispositif d'occultation selon la revendication 6, **caractérisé en ce que** ladite barre de tirage (62) comprend un élément de solidarisation à ladite traverse (2, 61), pouvant coulisser le long de ladite traverse (2, 61).

8. Dispositif d'occultation selon la revendication 7, **caractérisé en ce que** ledit élément de solidarisation définit avec ladite traverse (2, 61) un assemblage de type queue d'aronde.

9. Dispositif d'occultation selon l'une quelconque des revendications 1 à 8, **caractérisé en ce que** ledit véhicule porte deux rails latéraux (4, 5) guidant et/ou maintenant lesdits bords latéraux de ladite toile d'occultation (3) et/ou une barre de tirage (62) de ladite toile (3) et/ou au moins une baleine (63).

10. Dispositif d'occultation selon l'une quelconque des revendications 1 à 9, **caractérisé en que** ledit élément de guidage et/ou de maintien porte au moins une baleine (63) de maintien de ladite toile d'occultation (3).

11. Dispositif d'occultation selon l'une quelconque des revendications 1 à 10, **caractérisé en ce que** ladite traverse (2, 61) porte et/ou guide au moins une baleine (63) de maintien de ladite toile d'occultation (3).

12. Dispositif d'occultation selon l'une quelconque des revendications 1 à 11, **caractérisé en ce que** ladite traverse (2, 61) porte des moyens d'entraînement de ladite toile d'occultation (3) et/ou d'une barre de tirage (62) de ladite toile d'occultation (3).

13. Dispositif d'occultation selon l'une quelconque des revendications 1 à 12, **caractérisé en ce que** ladite toile d'occultation (3) est destinée à occulter au moins une des surfaces suivantes :
- un pavillon vitré ;
- un pare-brise ;
- une vitre latérale ;
- une vitre arrière ;
- un coffre à bagages.

14. Dispositif d'occultation selon l'une quelconque des revendications 1 à 13, **caractérisé en ce que** ladite traverse (2, 61) s'étend longitudinalement au moins au voisinage du pare-brise (1) dudit véhicule.

15. Dispositif d'occultation selon l'une quelconque des revendications 1 à 14, **caractérisé en ce que** ladite traverse (2, 61) s'étend longitudinalement au voisinage du pavillon dudit véhicule.

16. Véhicule équipé d'au moins un dispositif d'occultation selon l'une quelconque des revendications 1 à 15, comprenant une toile d'occultation (3) mobile selon un axe de déploiement entre une position repliée et au moins une position déployée, dont une extrémité est montée sur un tube enrouleur,
ladite toile d'occultation (3) portant au moins un élément de maintien et/ou de guidage (6) éloigné des bords latéraux de ladite toile (3) et s'étendant parallèlement audit axe de déploiement,
et coopérant avec un rail de guidage (21) de section complémentaire à celle dudit élément de maintien et/ou de guidage (6), formé dans ou sur une traverse (2, 61) s'étendant à l'intérieur dudit véhicule.

## Claims

1. Screening device for a vehicle, comprising a fabric screen (3) which is movable according to a deployment axis between a folded position and at least one deployed position, of which one end is mounted on a winding tube,
**characterised in that** said fabric screen (3) bears at least one supporting and/or guide element (6) remote from the lateral edges of said fabric and extending parallel to said deployment axis,
and cooperating with a guide rail (21) having a section which is complementary to that of said supporting and/or guide element (6) formed in, or on, a cross member (2, 61) extending inside said vehicle.

2. Screening device according to Claim 1, **characterised in that** said supporting element (6) extends substantially over the entire length of said fabric screen (3) .

3. Screening device according to any one of Claims 1 and 2, **characterised in that** said fabric screen (3) bears a supporting and/or guide element (6) which extends substantially in the centre of said fabric screen (3).

4. Device according to any one of Claims 1 to 3, **characterised in that** said complementary section is substantially triangular or trapezoidal.

5. Device according to any one of Claims 1 to 4, **characterised in that** said supporting element (6) is attached to said fabric screen (3) by bonding and/or welding and/or thermowelding and/or stitching.

6. Device according to any one of Claims 1 to 5, **characterised in that** said fabric screen (3) bears, at its free end, a draw bar (62) guided by said cross member (2, 61).

7. Screening device according to Claim 6, **characterised in that** said draw bar (62) comprises an element for attachment to said cross member (2, 61), capable of sliding along said cross member (2, 61).

8. Screening device according to Claim 7, **characterised in that** said element for attachment defines, with said cross member (2, 61), a dovetail-type assembly.

9. Screening device according to any one of Claims 1 to 8, **characterised in that** said vehicle bears two lateral rails (4, 5) guiding and/or supporting said lateral edges of said fabric screen (3) and/or a draw bar (62) of said fabric screen (3) and/or at least one rod (63).

10. Screening device according to any one of Claims 1 to 9, **characterised in that** said guide and/or supporting element bears at least one rod (63) for supporting said fabric screen (3).

11. Screening device according to any one of Claims 1 to 10, **characterised in that** said cross member (2, 61) bears and/or guides at least one rod (63) for supporting said fabric screen (3).

12. Screening device according to any one of Claims 1 to 11, **characterised in that** said cross member (2, 61) bears means for driving said fabric screen (3) and/or a draw bar (62) of said fabric screen (3).

13. Screening device according to any one of Claims 1 to 12, **characterised in that** said fabric screen (3) is intended to screen at least one of the following surfaces:
- a glass roof;
- a windscreen;
- a side window;
- a rear window;
- a luggage compartment.

14. Screening device according to any one of Claims 1 to 13, **characterised in that** said cross member (2, 61) extends longitudinally at least in the vicinity of the windscreen (1) of said vehicle.

15. Screening device according to any one of Claims 1 to 14, **characterised in that** said cross member (2, 61) extends longitudinally in the vicinity of the roof of said vehicle.

16. Vehicle provided with at least one screening device according to any one of Claims 1 to 15, comprising a fabric screen (3) which is movable according to a deployment axis between a folded position and at least one deployed position, of which one end is mounted on a winding tube,
said fabric screen (3) bearing at least one supporting and/or guide element (6) remote from the lateral edges of said fabric (3) and extending parallel to said deployment axis,
and cooperating with a guide rail (21) having a section which is complementary to that of said supporting and/or guide element (6) formed in, or on, a cross member (2, 61) extending inside said vehicle.

## Patentansprüche

1. Abdeckungsvorrichtung für Fahrzeuge mit einer Abdeckbahn (3), die entlang einer Ausziehachse zwischen einer eingezogenen Position und mindestens einer ausgezogenen Position beweglich ist und deren eines Ende an einer Wickelwelle angebracht ist, **dadurch gekennzeichnet, dass** diese Abdeckbahn (3) mindestens ein Halte- und/oder Führungselement (6) trägt, das von den Seitenrändern der Bahn beabstandet ist und sich parallel zu der Ausziehachse erstreckt und mit einer Führungsschiene (21) zusammenwirkt, deren Querschnitt komplementär zum Querschnitt des Halte- und/oder Führungselements (6) ist und die in oder an einer im Inneren des Fahrzeugs verlaufenden Traverse (2, 61) ausgebildet ist.

2. Abdeckungsvorrichtung nach Anspruch 1, **dadurch gekennzeichnet, dass** sich das Halteelement (6) im Wesentlichen über die gesamte Länge der Abdeckbahn (3) erstreckt.

3. Abdeckungsvorrichtung nach einem der Ansprüche 1 und 2, **dadurch gekennzeichnet, dass** die Abdeckbahn (3) ein Halte- und/oder Führungselement (6) trägt, das sich im Wesentlichen in der Mitte der Abdeckbahn (3) erstreckt.

4. Vorrichtung nach einem der Ansprüche 1 bis 3, **dadurch gekennzeichnet, dass** der komplementäre Querschnitt im Wesentlichen dreieckig oder trapezförmig ist.

5. Vorrichtung nach einem der Ansprüche 1 bis 4, **dadurch gekennzeichnet, dass** das Halteelement (6) durch Kleben und/oder Schweißen und/oder Schmelzschweißen und/oder Nähen fest mit der Abdeckbahn verbunden ist.

6. Vorrichtung nach einem der Ansprüche 1 bis 5, **dadurch gekennzeichnet, dass** die Abdeckbahn (3) an ihrem freien Ende eine Zugstrebe (62) trägt, die von der Traverse (2, 61) geführt wird.

7. Abdeckungsvorrichtung nach Anspruch 6, **dadurch gekennzeichnet, dass** die Zugstrebe (62) ein Element zur Befestigung an der Traverse (2, 61) umfasst, das entlang dieser Traverse (2, 61) gleiten kann.

8. Abdeckungsvorrichtung nach Anspruch 7, **dadurch gekennzeichnet, dass** das Befestigungselement mit der Traverse (2, 61) eine Schwalbenschwanzverbindung bildet.

9. Abdeckungsvorrichtung nach einem der Ansprüche 1 bis 8, **dadurch gekennzeichnet, dass** das Fahrzeug zwei seitliche Schienen (4, 5) umfasst, die die Seitenränder der Abdeckbahn (3) und/oder eine Zugstrebe (62) der Bahn (3) und/oder mindestens einen Spriegel (63) führen und/oder halten.

10. Abdeckungsvorrichtung nach einem der Ansprüche 1 bis 9, **dadurch gekennzeichnet, dass** das Führungs- und/oder Halteelement mindestens einen Spriegel (63) zum Halten der Abdeckbahn (3) trägt.

11. Abdeckungsvorrichtung nach einem der Ansprüche 1 bis 10, **dadurch gekennzeichnet, dass** die Traverse (2, 61) mindestens einen Spriegel (63) zum Halten der Abdeckbahn (3) trägt und/oder führt.

12. Abdeckungsvorrichtung nach einem der Ansprüche 1 bis 11, **dadurch gekennzeichnet, dass** die Traverse (2, 61) Antriebsmittel für die Abdeckbahn (3) und/oder eine Zugstrebe (62) der Abdeckbahn (3) trägt.

13. Abdeckungsvorrichtung nach einem der Ansprüche 1 bis 12, **dadurch gekennzeichnet, dass** die Abdeckbahn (3) dazu dient, mindestens eine der folgenden Flächen abzudecken:
- ein Glasdach;
- eine Windschutzscheibe;
- eine Seitenscheibe;
- eine Heckscheibe;
- einen Kofferraum.

14. Abdeckungsvorrichtung nach einem der Ansprüche 1 bis 13, **dadurch gekennzeichnet, dass** sich die Traverse (2, 61) längs zumindest in der Nähe der Windschutzscheibe (1) des Fahrzeugs erstreckt.

15. Abdeckungsvorrichtung nach einem der Ansprüche 1 bis 14, **dadurch gekennzeichnet, dass** sich die Traverse (2, 61) längs in der Nähe des Dachs des Fahrzeugs erstreckt.

16. Fahrzeug, das mit mindestens einer Abdeckungsvorrichtung nach einem der Ansprüche 1 bis 15 mit einer Abdeckbahn (3) ausgestattet ist, die entlang einer Ausziehachse zwischen einer eingezogenen Position und mindestens einer ausgezogenen Position beweglich ist und deren eines Ende an einer Wickelwelle angebracht ist, wobei die Abdeckbahn (3) mindestens ein Halte- und/oder Führungselement (6) trägt, das von den Seitenrändern der Bahn (3) beabstandet ist und sich parallel zur Ausziehachse erstreckt und mit einer Führungsschiene (21) zusammenwirkt, deren Querschnitt komplementär zum Querschnitt des Halte- und/oder Führungselements (6) ist und die in oder an einer im Inneren des Fahrzeugs verlaufenden Traverse (2, 61) ausgebildet ist.
